(19) **Europäisches Patentamt European Patent Office Office européen des brevets**

(11) **EP 1 891 419 B1**

(12) **FASCICULE DE BREVET EUROPEEN**

(45) Date de publication et mention de la délivrance du brevet:
**17.05.2017 Bulletin 2017/20**

(21) Numéro de dépôt: **06764771.9**

(22) Date de dépôt: **12.06.2006**

(51) Int Cl.:
*G01N 21/89* (2006.01)   *G01N 25/72* (2006.01)
*B21B 38/00* (2006.01)   *G01N 21/952* (2006.01)

(86) Numéro de dépôt international:
**PCT/FR2006/001322**

(87) Numéro de publication internationale:
**WO 2006/134259 (21.12.2006 Gazette 2006/51)**

(54) **PROCEDE ET INSTALLATION POUR LA DETECTION DE DEFAUTS DE SURFACE ET DE STRUCTURE D UN PRODUIT LONG EN DEFILEMENT**

VERFAHREN UND ANORDNUNG ZUM NACHWEIS VON OBERFLÄCHEN- UND STRUKTURDEFEKTEN EINES LANGEN SICH BEWEGENDEN PRODUKTS

METHOD AND ARRANGEMENT FOR DETECTING SURFACE AND STRUCTURAL DEFECTS OF A LONG MOVING PRODUCT

(84) Etats contractants désignés:
**DE FR GB**

(30) Priorité: **14.06.2005 FR 0506039**

(43) Date de publication de la demande:
**27.02.2008 Bulletin 2008/09**

(73) Titulaire: **Primetals Technologies France SAS 42600 Savigneux (FR)**

(72) Inventeurs:
- **JANIN, Pierre-Jean**
  **F-78690 Les Essarts le Roi (FR)**
- **PEYSSARD, Mathieu**
  **F-78400 Chatou (FR)**

(74) Mandataire: **Metals@Linz Primetals Technologies Austria GmbH Intellectual Property Upstream IP UP Turmstraße 44 4031 Linz (AT)**

(56) Documents cités:
**EP-A- 0 105 401      EP-A- 0 974 833
WO-A-01/17264      WO-A-2004/051178
US-A- 4 139 890      US-A- 4 608 599
US-A- 4 759 072      US-A- 5 654 977**

- **PATENT ABSTRACTS OF JAPAN vol. 016, no. 270 (M-1266), 17 juin 1992 (1992-06-17) & JP 04 066225 A (GOUDOU SEITETSU KK), 2 mars 1992 (1992-03-02)**
- **CERACKI P ET AL: "ONLINE-FEHLERERKENNUNG BEI WARMBAND DURCH AUTOMATISCHE OBERFLAECHENINSPEKTION" STAHL UND EISEN, VERLAG STAHLEISEN, DUSSELDORF, DE, vol. 119, no. 4, 15 avril 1999 (1999-04-15), pages 77-81,164, XP000830261 ISSN: 0340-4803**

**Description**

La présente invention concerne, de façon générale, les techniques permettant de détecter les éventuels défauts d'un produit en cours de défilement dans une installation de laminage.

Plus précisément, l'invention concerne, selon un premier de ses aspects, un procédé de détection de défaut comprenant au moins une opération d'éclairage consistant à éclairer le produit en défilement par une source de lumière, une opération d'acquisition consistant à former par balayage une première image du produit en défilement, observé dans une première bande spectrale de lumière, une opération de prétraitement consistant au moins à produire, à partir de la première image d'une zone d'observation du produit, une première distribution numérisée de luminosité de cette zone, une opération de détection et d'extraction de domaines suspects consistant à exploiter la première distribution numérisée de luminosité de la zone d'observation du produit pour détecter la présence et la localisation d'éventuels défauts dans cette zone, et une opération de classification consistant au moins à classer les domaines suspects dans une ou plusieurs catégories de défauts ou de non-défauts par comparaison des caractéristiques morphologiques et / ou photométriques de ces domaines suspects avec des caractéristiques morphologiques et / ou photométriques de défauts connus et de non-défauts connus, conservés dans une base de données préétablie.

La distribution numérisée de luminosité est formée de pixels codés sur plusieurs bits et constitue en fait une image normalisée de niveaux de gris correspondant à la distribution de luminosité de l'image résultant de l'acquisition, après correction des distorsions connues, inhérentes à l'éclairage et à la prise de vue.

Un procédé de ce type est connu de l'homme du métier pour les produits sidérurgiques laminés à froid, ce procédé étant notamment décrit dans un article de M. Dominique Blanchard, intitulé "Système d'inspection automatique de surface : expérience et perspective au sein du Groupe Usinor", et paru en Juin 2002 dans la "Revue de la Métallurgie".

Ce procédé connu présente un grand intérêt pour l'inspection en temps réel des produits sidérurgiques laminés à froid et dits "plats", c'est-à-dire des produits présentant un rapport largeur / épaisseur très élevé, typiquement supérieur à 100 ou plus.

En effet, compte tenu de la faible épaisseur de ces produits, les défauts qui sont susceptibles de les affecter se traduisent pratiquement toujours par des altérations de leur surface externe.

La situation est très différente dans les produits connus en sidérurgie sous la dénomination de "produits longs", qui se caractérisent par une section de forme géométrique dont les deux dimensions principales ont une taille du même ordre de grandeur, et qui peuvent être affectés non seulement par des défauts de surface, mais également par des défauts internes non révélés en surface.

Les produits longs sont généralement obtenus à partir de billettes élaborées en coulée continue et ensuite laminées à chaud dans une succession de cages de laminoir disposées horizontalement et verticalement, ces directions définissant, pour chaque cage, l'orientation de l'axe de rotation de ses cylindres de travail. Le laminage s'effectue à température élevée, généralement vers 1000 °C lorsqu'il s'agit d'acier, l'invention n'étant cependant pas limitée à l'acier et pouvant s'appliquer également à d'autres métaux, notamment à des métaux non ferreux comme le cuivre, ou même à d'autres matériaux.

La pratique de laminage de l'acier permet de réduire la dimension du produit dans deux directions perpendiculaires tout en l'allongeant selon l'axe de la troisième direction. Cette méthode permet d'obtenir des propriétés mécaniques particulières avec une certaine symétrie axiale. Selon la forme géométrique de la section à obtenir, on dispose d'un nombre de cages plus ou moins important et l'on peut réaliser des formes de sections particulières en utilisant des cylindres comportant des cannelures. La succession des formes de la section du produit pendant l'allongement, qui se nomme "calibrage", a un rôle particulièrement important pour l'obtention des caractéristiques mécaniques du produit dans toutes les directions de cette section. On peut ainsi obtenir des produits en forme de barres, qui peuvent être de section ronde ou ovale, ou encore carrée, rectangulaire, hexagonale ou octogonale. Mais on peut réaliser des formes de section plus complexes et non symétriques telles que les cornières, les poutrelles en I ou en H ou bien encore les rails.

Néanmoins, un tel procédé n'est pas sans inconvénients pour la structure du produit, particulièrement des produits métalliques et surtout en acier.

En effet des défauts d'origines différentes peuvent se retrouver associés dans la structure du produit, notamment des défauts de surface causés par de la calamine qui reste accrochée à la surface du produit et qui provient de l'oxydation de la surface provoquée par le refroidissement à l'eau des cages de laminage. Du fait du laminage dans deux directions perpendiculaires dans les cages horizontales et dans les cages verticales, la calamine peut aussi s'incruster à l'intérieur du produit, et ceci beaucoup plus facilement que dans les produits plats dont l'épaisseur a été réduite toujours dans la même direction et de manière considérable par rapport à leur largeur. De plus, l'utilisation de cylindres avec des cannelures pour certaines cages peut provoquer des repliures du métal, ce qui peut faire pénétrer à l'intérieur de la section du produit certaines quantités de métal de température différente et provoquer des hétérogénéités. Enfin des difficultés apparues encore plus en amont, comme une mauvaise lubrification à la coulée de la billette ou un choc thermique lors du refroidissement peuvent générer des défauts de structure du métal qui pourront se trouver localisés à l'intérieur de la section du produit aussi bien qu'à sa surface après le laminage.

Il est donc important, en particulier pour les produits longs, de pouvoir détecter non seulement les défauts de surface mais également des défauts présents sous la surface.

On connaît, par le brevet US 4 759 072, un procédé permettant de discriminer des défauts de surface d'un produit laminé d'éventuels artefacts susceptibles d'être confondus avec de tels défauts, ce procédé comprenant l'acquisition de deux images tridimensionnelles dont chacune représente une distribution de luminosité du produit, dont l'une se situe dans l'infrarouge et résulte de l'émission spontanée du produit, et dont l'autre se situe dans le domaine visible et résulte de la réflexion d'une lumière visible projetée sur le produit

Après filtrage par feuillage, ces images sont combinées l'une à l'autre par produit logique de manière à faire apparaître les zones correspondant aux défauts apparaissant à la fois dans l'infrarouge et dans le spectre visible.

On connaît encore, par le brevet US 4 608 599, un procédé de synchronisation de plusieurs images vidéo sur un même moniteur, ce procédé permettant à un observateur humain de visualiser successivement ou en surimpression plusieurs images bidimensionnelles représentant des distributions de luminosité d'images respectivement émises de façon spontanée, dans l'infrarouge et dans le spectre visible, par un objet en cours d'observation.

On connaît déjà une technique de détection des défauts internes d'un produit, fondée sur l'analyse de la propagation d'ondes ultrasonores à l'intérieur de ce produit. Cette technique, connue sous le nom d'ondes de Lamb, donne des résultats satisfaisants pour la détection des inclusions, mais nécessite que l'ensemble émetteur - capteur soit au contact du produit à inspecter par l'intermédiaire d'une couche de liquide huile - eau pour assurer une bonne transmission des ondes ultrasonores. Or, cette contrainte rend évidemment la technique en question inapplicable au cas où le produit à inspecter est constitué par une masse d'acier à haute température.

Dans ce conteste, la présente invention a donc principalement pour but de permettre la détection des défauts éventuellement présents sous la surface d'un produit en cours de défilement dans une installation de laminage, mais idéalement de permettre aussi la détection des défauts de surface de ce produit, en particulier dans le cas d'un produit long.

A cette fin, l'invention concerne un procédé selon la revendication 1.

En d'autres termes, le procédé de l'invention consiste à analyser les images constituées à partir des lumières émises dans le domaine infrarouge par le produit lui-même et en particulier la partie interne de sa section, ainsi que des images constituées par des lumières émises par la surface, résultant soit de l'émission propre du produit dans le domaine infrarouge et dans le domaine visible, soit de la réflexion par le produit de la lumière fournie par un éclairage additionnel. En effet lors du laminage, par exemple d'acier qui se produit aux environs de 1000°C, il se forme un gradient de température important entre le centre de la section du produit et la surface, donc un gradient de longueur d'onde de lumière, dont ne parvient à l'extérieur que la partie contenue dans le domaine de l'infrarouge. Par contre, la surface du produit émet de la lumière dans le domaine infrarouge et dans le domaine visible, notamment dans le rouge.

Bien que l'opération qui consiste à former des images d'une même zone d'observation du produit dans des bandes spectrales différentes soit déjà décrite dans le brevet US 4 759 072 dans le même contexte d'un produit laminé à chaud, ce document antérieur n'évoque pas du tout le problème qui consiste à détecter les défauts internes de ce produit et ne décrit a fortiori aucun moyen susceptible de résoudre ce problème.

Selon l'invention, on prévoit de préférence que les images soient réalisées au moyen de capteurs respectifs au moins sensibles à l'infrarouge et produisant des images brutes respectives, que la première image soit réalisée dans l'infrarouge et directement obtenue par capture de la première image brute derrière un filtre optique opaque aux rayonnements de longueurs d'onde inférieures à l'infrarouge, et que les deuxième et troisième images soient respectivement obtenues à partir des deuxième et troisième images brutes par soustraction de la première image brute.

L'opération d'éclairage peut consister à éclairer le produit par une source de lumière verte, la troisième image étant alors réalisée dans le vert.

L'opération de prétraitement inclut avantageusement la production d'une quatrième distribution numérisée de luminosité obtenue par combinaison linéaire des trois distributions numérisées originelles, cette quatrième distribution étant utilisée, dans l'opération de détection et d'extraction et dans l'opération de classification, au même titre que les trois distributions numérisées originelles.

Le procédé de l'invention est particulièrement avantageux dans le cas où le produit en cours de défilement dans l'installation de laminage à chaud est un produit long, c'est-à-dire d'un produit dont la section transversale s'inscrit typiquement dans un polygone, un cercle ou une ellipse, et en tout cas présente des dimensions principales du même ordre de grandeur entre elles et très inférieures à la longueur du produit, orientée suivant la direction du défilement de ce produit.

Dans ce cas, la zone d'observation commune aux trois images s'étend sur tout le pourtour du produit et sur une partie au moins de sa longueur, et chacune des trois images peut être formée en accolant l'une à l'autre au moins deux images élémentaires formées, dans une même bande spectrale de lumière, sur une même partie de la longueur du produit et sur des portions disjointes et complémentaires du pourtour de ce produit.

L'invention concerne encore une installation pour la mise en oeuvre d'un procédé tel que précédemment décrit, cette installation étant caractérisée en ce qu'elle comprend au moins une caméra numérique CCD dotée de trois barrettes de détection linéaires, disposées transversalement à la direction de défilement du produit et sensibles à des couleurs différentes du spectre de la lumière visible.

L'opération d'éclairage sera mise en oeuvre au moyen d'un dispositif d'éclairage auxiliaire dont la longueur d'onde sera avantageusement choisie dans une plage éloignée du rouge et de l'infrarouge. D'une façon particulièrement avantageuse, ces moyens d'éclairage additionnels pourront être constitués de diodes électroluminescentes (LED).

L'ensemble du rayonnement lumineux émis ou réémis par le produit donnera, en présence de défauts de ce dernier, des images comportant des zones localisées d'émission différentes, et ces défauts pourront être détectés, localisés et différentiés par l'analyse des images formées à partir des différentes lumières et par leur comparaison.

L'acquisition des images est réalisée en continu, le produit étant vu sous une pluralité d'angles différents par rapport à une même direction de référence, lesdits angles couvrant un secteur de 360 degrés, de manière à constituer une image continue de tout le pourtour du produit sur une section déterminée de sa longueur ou la totalité de celle-ci. Les acquisitions de toutes les images détectées sous les différents angles sont synchronisées entre elles de manière à pouvoir élaborer, à un instant donné, une image unique sur tout le pourtour du produit en défilement au même endroit de sa longueur. De façon préférentielle l'acquisition des images est aussi synchronisée avec le défilement du produit en cours de laminage de façon à pouvoir localiser les défauts détectés par rapport à la longueur du produit.

Une installation de détection des défauts d'un produit long en défilement pendant le laminage à chaud comporte, selon l'invention, des moyens de formation, d'acquisition et de traitement d'images. Ces moyens sont disposés dans les intervalles séparant les cages verticales et horizontales d'une installation de laminage à chaud d'un produit dont la section transversale a une forme géométrique peu aplatie, par exemple circulaire, ovale ou polygonale, et régulière ou non. De façon préférentielle, le matériel de détection de défauts d'une installation selon l'invention est installé de telle façon qu'il puisse réaliser l'acquisition d'images du produit lors de son défilement entre les troisième et quatrième cages du train de laminage à chaud.

Le matériel de détection et le matériel de l'éclairage additionnel sont protégés, selon l'invention, de l'ambiance du train de laminage et des possibles incidents par des moyens de protection et des moyens de refroidissement.

D'autres caractéristiques et avantages de l'invention ressortiront clairement de la description qui en est faite ci-après, à titre indicatif et nullement limitatif, en référence aux dessins annexés, dans lesquels :

- La figure 1 est une vue de dessus schématique d'une partie d'une ligne de laminage à chaud pour produits longs, équipée d'un dispositif de détection des défauts selon l'invention;

- La figure 2 représente schématiquement en vue de côté le dispositif de détection des défauts selon l'invention, installé dans la ligne de laminage;

- La figure 3 est une vue schématique en coupe du dispositif de détection des défauts selon l'invention pour un produit rectangulaire;

- La figure 4 est une vue schématique en coupe du dispositif de détection des défauts selon l'invention pour un produit hexagonal;

- La figure 5 est une vue schématique en coupe du dispositif de détection des défauts selon l'invention pour un produit octogonal;

- La figure 6 est une vue schématique simplifiée de la chaîne d'acquisition des images selon l'invention;

- La figure 7 représente de manière schématique les caméras d'un dispositif de détection de défauts selon l'invention et leur protection; et

- La figure 8 est une vue schématique du traitement appliqué par le calculateur illustré à la figure 6 aux données qui lui sont fournies.

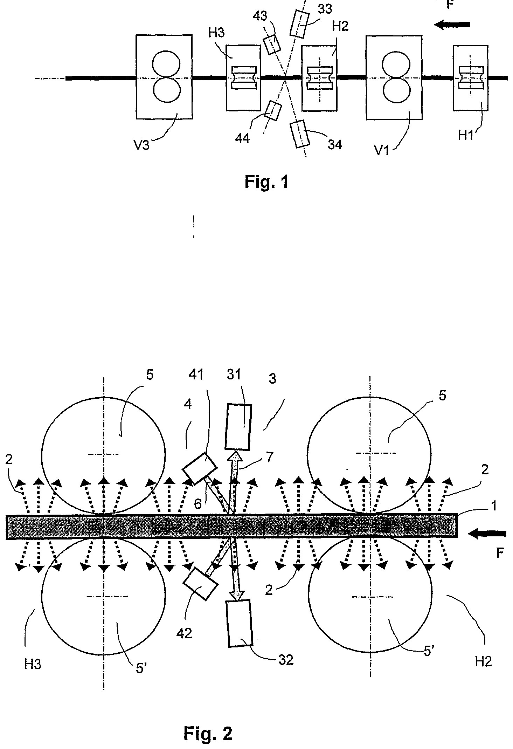

Ainsi que le montrent les figures 1 et 2, une ligne de laminage à chaud de produits longs est constituée d'une succession de cages de laminoirs horizontales et verticales. Ainsi, par exemple, l'entrée du train de laminage est constituée des cages H1, V1, H2, H3 et V2. Le procédé selon l'invention permet de détecter par voie optique les défauts présents à la surface et sous la surface du produit laminé, quelle que soit la forme de la section du produit. La lumière spontanément émise par le produit est détectée par un ensemble de caméras disposées dans des coffrets 3 répartis tout autour du produit en défilement dans la direction indiquée par la flèche F. De manière préférentielle, cet ensemble de caméras 3 est installé entre les troisième et quatrième cages de laminage qui sont représentées sur les figures 1 et 2 par des cages horizontales H2 et H3. Le rayonnement lumineux 2 spontanément émis par le produit se situe dans le spectre visible et dans le spectre invisible, et se propage dans toutes les directions tout le long du produit.

Ce rayonnement spontané est combiné à la lumière fournie par un éclairage additionnel 4 et réfléchie par la surface du produit. Cet éclairage additionnel est disposé dans des coffrets 4 installés tout autour du produit en entourant l'axe de défilement de celui-ci. Le rayonnement lumineux 6 issu de cet éclairage additionnel logé dans les coffrets 4 est choisi dans le domaine des longueurs d'ondes visibles. Ce rayonnement lumineux, après réflexion sur la surface du produit, peut être capté par les caméras placées dans les coffrets 3. En pratique, il est donc nécessaire de décaler dans l'espace les coffrets 3 et les coffrets 4 de manière que la lumière incidente vienne éclairer la surface du produit selon un certain angle et soit généralement réfléchie selon un autre angle, celui de la vision des caméras.

Pour pouvoir scruter toute la surface du produit, une pluralité de caméras est disposée selon des angles différents par rapport aux plans horizontaux et verticaux passant par l'axe de défilement du produit. Ainsi la figure 1 représente les coffrets 33 et 34 contenant des caméras, ces coffrets étant situés dans un plan horizontal passant par l'axe de défilement du produit et étant orientés, dans ce plan, selon le même angle par rapport à l'axe de défilement, de façon à viser à un instant donné la même section du produit.

Une représentation similaire a été adoptée sur la figure 2 qui montre les coffrets 31 et 32 disposés dans un plan vertical passant par l'axe de défilement du produit et orientés de la même façon pour que les caméras qu'ils contiennent puissent viser, à un instant donné, la même section du produit en défilement, qui est aussi celle visée, au même instant par les caméras contenues dans les coffrets 33 et 34. Bien entendu, pour éclairer de manière suffisante et équivalente toutes les parties de la surface du produit 1, à chaque coffret de caméras 31, 32, 33, et 34 est associé un coffret contenant l'éclairage additionnel 41, 42, 43 et 44. Sur la représentation des figures 1 et 2 on dispose donc de deux coffrets 41, 42 situés dans le plan vertical passant par l'axe de défilement du produit, et de deux coffrets d'éclairage 43, 44 situés dans le plan horizontal passant par l'axe de défilement. Dans chacun de ces plans, l'éclairage est orienté par rapport à l'axe de défilement de façon que tous les coffrets d'éclairage projettent la lumière additionnelle sur la même section du produit en défilement, cette section étant celle visée au même instant par l'ensemble des caméras contenues dans les coffrets 31, 32, 33 et 34.

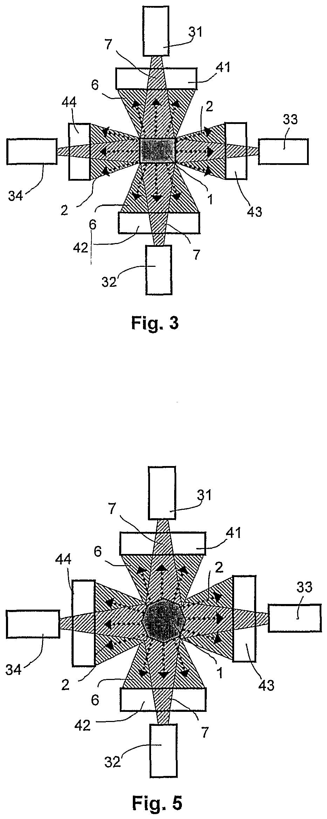

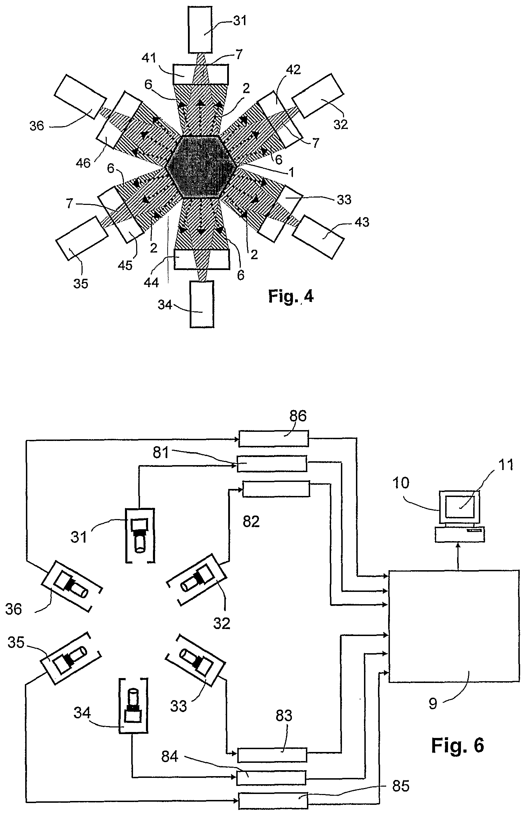

Une telle disposition, comportant quatre coffrets d'éclairage et quatre coffrets de caméras permet de contrôler les défauts d'un produit de section rectangulaire, une vue en coupe de cette disposition est représentée sur la figure 3. Selon la forme de la section du produit 1 on disposera d'un nombre de dispositifs d'éclairage 41, 42, ...et de coffrets de caméras 31, 32, 33, ... de manière à pouvoir faire l'acquisition d'images de toutes les faces de la section du produit en défilement. Pour un produit de section octogonale, par exemple, on pourra utiliser la même disposition que pour une section rectangulaire, ainsi qu'il est représenté sur la figure 5. En effet si on oriente les dispositifs d'éclairage 41, 42, 43, et 44 et les coffrets de caméras 31, 32, 33 et 34 de manière à ce que leurs axes passent par un axe de symétrie de la section du produit, chaque face du produit est orientée selon un angle de 22,5° par rapport à l'axe d'un dispositif d'éclairage ou par rapport à celui d'un coffret de caméras. Ainsi chacun de ces dispositifs pourra traiter deux faces adjacentes de la section du produit sous un angle d'incidence tout à fait acceptable pour la qualité de l'image à former, que ce soit en ce qui concerne l'angle d'incidence de la lumière additionnelle, ou l'angle de visée des caméras. La figure 4 représente une disposition utilisable pour un produit dont la section est de forme hexagonale. Il est préférable dans ce cas de disposer de 6 ensembles d'éclairage additionnel 41, 42, 43, 44, 45 et 46 et de 6 coffrets de caméras 31, 32, 33, 34, 35 et 36. Comme le montre la figure 4, il est alors aisé de disposer les moyens d'éclairage et de détection de manière que les axes optiques soient perpendiculaires à chacune des faces du produit à contrôler.

D'une façon plus générale, dans le cas d'une forme de la section du produit 1 plus complexe, ou irrégulière, on disposera une pluralité de caméras tout autour de l'axe de défilement, selon un secteur angulaire complet de 360° de manière que les angles de vision couvrent la totalité du pourtour d'une section du produit à contrôler.

Les moyens d'éclairage additionnel 41, 42, 43, ... sont choisis pour fournir une lumière 6 contrastant avec les longueurs d'ondes se situant dans la plage du rouge et de l'infrarouge, par exemple une lumière jaune ou bleue, mais avantageusement une lumière verte. Ces moyens d'éclairage sont de préférence constitués, dans chaque coffret, d'une rangée de diodes électroluminescentes (ou "LED") alignées. Ces composants permettent de réaliser un moyen d'éclairage de faible coût, d'une très grande durée de vie des lampes et ne dégageant pas de chaleur, ce qui est important car leur mise en oeuvre, leur accessibilité, et leur protection à l'ambiance nécessite de les fermer dans un coffret. Des moyens de refroidissement puissants et coûteux sont ainsi évités.

Chacune des caméras est avantageusement constituée par une caméra couleur généralement équipée de trois barrettes CCD de détection linéaire, disposées transversalement à la direction de défilement du produit.

Ces barrettes sont précédées de filtres optiques respectifs et différents, chaque barrette produisant ainsi, pendant un intervalle de temps donné, une image brute élémentaire d'une portion du pourtour de ce produit sur une section de longueur correspondant à la distance parcourue par ce produit pendant cet intervalle le temps, cette image étant formée dans une bande spectrale spécifique correspondant au filtre choisi.

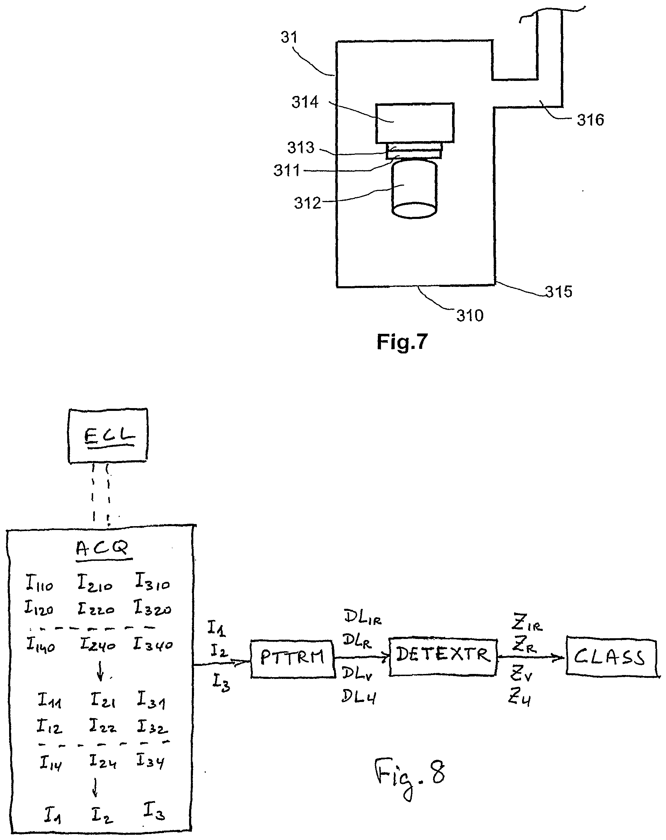

Ainsi, la barrette de cellules sensibles CCD 313 de la caméra 31 (figure 7) est précédée d'un filtre couleur 311 laissant passer uniquement les longueurs d'onde infra rouge, la lumière en provenance du produit étant concentrée sur les barrettes de chaque caméra telle que 31 par un dispositif optique 312.

De même, une seconde barrette (non représentée) de chaque caméra telle que 31 est précédée d'un filtre couleur laissant passer la lumière rouge en provenance du produit, et une troisième barrette (non représentée) est précédée d'un filtre couleur laissant par exemple passer la lumière verte en provenance du produit.

La première barrette de la caméra 31 fournit ainsi, pendant un intervalle de temps donné, une première image élémentaire brute $I_{110}$, la deuxième barrette de cette caméra 31 fournissant, pendant cet intervalle de temps, une deuxième image élémentaire brute $I_{210}$, et la troisième barrette de cette même caméra fournissant, pendant ce même intervalle de temps, une troisième image élémentaire brute $I_{310}$.

Le premier indice affecté aux images $I_{110}$, $I_{210}$, et $I_{310}$, qui prend respectivement les valeurs 1, 2, et 3, rappelle que ces trois images élémentaires brutes sont formées dans trois bandes spectrales respectives différentes.

Le deuxième indice affecté aux images $I_{110}$, $I_{210}$, et $I_{310}$, qui ne prend que la valeur 1, rappelle que ces trois images élémentaires brutes sont relatives à une même première portion du pourtour du produit.

Et le troisième indice affecté aux images $I_{110}$, $I_{210}$, et $I_{310}$, qui ne prend que la valeur 0, rappelle que ces trois images élémentaires sont celles qui sont obtenues avant tout traitement.

De même, les différentes barrettes de la caméra 32 fourniront des images élémentaires brutes $I_{120}$, $I_{220}$, et $I_{320}$, celles de la caméra 33 des images élémentaires brutes $I_{130}$, $I_{230}$, et $I_{330}$, et celles de la caméra 34 des images élémentaires brutes $I_{140}$, $I_{240}$, et $I_{340}$.

En réalité, quelle que soit la bande spectrale à laquelle une barrette est a priori affectée, cette barrette reste sensible aux rayonnements infrarouges, de sorte qu'il convient de former, à partir des images élémentaires brutes, des images élémentaires corrigées de cet effet.

Cette remarque ne s'appliquant évidemment pas aux barrettes agencées pour produire une image élémentaire infrarouge, les images élémentaires $I_{110}$, $I_{120}$, $I_{130}$, et $I_{140}$ produites par les premières barrettes des caméras 31 à 34 constituent directement des images élémentaires $I_{11}$, $I_{12}$, $I_{13}$, et $I_{14}$ du produit dans l'infrarouge.

En revanche, les images élémentaires $I_{21}$, $I_{22}$, $I_{23}$, et $I_{24}$ du produit dans le rouge sont obtenues en soustrayant aux images élémentaires brutes du produit dans le rouge les images élémentaires respectives du produit dans l'infrarouge, c'est-à-dire par :

$$I_{21} = I_{210} - I_{11} \; ; \; I_{22} = I_{220} - I_{12} \; ; \; I_{23} = I_{230} - I_{13} \; ; \; \text{et} \; I_{24} = I_{240} - I_{14}.$$

De même, les images élémentaires $I_{31}$, $I_{32}$, $I_{33}$, et $I_{34}$ du produit dans le vert sont obtenues en soustrayant aux images élémentaires brutes du produit dans le vert les images élémentaires respectives du produit dans l'infrarouge, c'est-à-dire par :

$$I_{31} = I_{310} - I_{11} \; ; \; I_{32} = I_{320} - I_{12} \; ; \; I_{33} = I_{330} - I_{13} \; ; \; \text{et} \; I_{34} = I_{340} - I_{14}.$$

Ainsi, les images élémentaires produites pour chaque portion du contour du produit, par exemple les images élémentaires $I_{11}$, $I_{21}$, et $I_{31}$, sont formées dans des bandes spectrales disjointes, de sorte que chaque image élémentaire formée dans le vert ne contient que les informations résultant de la réflexion de la lumière verte par la surface du produit.

Le procédé de l'invention peut utiliser, pour chaque caméra et par exemple en tant que caméra 31, une caméra CCD dotée de manière standard de canaux de prise de vue rouge, vert et bleu, et en plaçant devant la barrette du canal bleu un filtre optique opaque aux rayonnements de longueurs d'onde inférieures à l'infrarouge, le canal bleu ainsi modifié de la caméra 31 fournissant le signal $I_{11}$.

Un circuit d'alimentation et d'interface 314 permet pour chaque caméra de faire la liaison avec les circuits électroniques d'acquisition d'images 81, 82, 83, .... Ces circuits sont installés dans les coffrets 31, 32, 33, ... pour être installés dans le train de laminage à chaud, à proximité immédiate du produit. Les coffrets 31, 32, 33, ... sont constitués d'une enveloppe métallique durcie 315, 325, 335, ....entièrement fermée. Ces ensembles sont étanches et refroidis par un soufflage d'air 316, 326, 336, .....Une fine zone transparente sur la face avant de chaque coffret 310, 320, 330, ... permet de recevoir les lumières émises par réflexion et diffusion naturelle.

Les images élémentaires acquises par les différentes caméras sont synchronisées entre elles par la chaîne de mesure dont l'architecture est représentée très schématiquement sur la figure 6. Les acquisitions sont pilotées par un calculateur 9 qui synchronise tous les circuits électroniques d'acquisition 8 des caméras. Ces acquisitions sont réalisées en temps réel et synchronisées avec l'avance du produit 1 en laminage. Le calculateur 9 peut ainsi reconstituer à chaque instant, sur un dispositif de visualisation et de commande opérateur 10, une image complète 11 du pourtour d'une section du produit, vu à un instant déterminé. L'image élémentaire acquise par chacune des caméras pendant un certain temps est juxtaposée à l'image acquise par la caméra voisine, formant ainsi une image complète et continue de toute la surface du produit 1 observé. La synchronisation de l'acquisition des images avec l'avance du produit permet de localiser l'image ainsi constituée selon la longueur du produit.

Il est ainsi possible de disposer, sur un même intervalle de temps, c'est-à-dire sur une section déterminée de longueur du produit, d'une image complète du pourtour de ce produit dans chacune des trois bandes spectrales disjointes, cette image complète étant obtenue en accolant les unes aux autres les images élémentaires formées dans cette bande.

En d'autres termes, l'accolement des images élémentaires $I_{11}$, $I_{12}$, $I_{13}$, et $I_{14}$ du produit dans l'infrarouge, issues des caméras 31 à 34 (figures 3 ou 5) fournit une image complète $I_1$ du pourtour de ce produit dans l'infrarouge, l'accolement des images élémentaires $I_{21}$, $I_{22}$, $I_{23}$, et $I_{24}$ du produit dans le rouge fournit une image complète $I_2$ du pourtour de ce produit dans le rouge, et l'accolement des images élémentaires $I_{31}$, $I_{32}$, $I_{33}$, et $I_{34}$ du produit dans le vert fournit une image complète $I_3$ du pourtour de ce produit dans le vert.

Les images complètes $I_1$, $I_2$ et $I_3$ du pourtour du produit, ainsi formées dans les trois bandes spectrales de l'infrarouge, du rouge et du vert lors de l'acquisition ACQ (figure 8) concomitamment à l'éclairage ECL du produit, sont constituées de pixels codés sur plusieurs bits et forment donc des cartographies de niveaux de gris.

Le calculateur 9 contient par ailleurs des algorithmes de traitement d'images lui permettant de mettre en oeuvre le procédé de l'invention.

Tout d'abord, en effet, le calculateur 9 doit corriger les images complètes $I_1$, $I_2$ et $I_3$ du pourtour du produit, qui sont affectées de diverses distorsions résultant notamment d'éventuels défauts d'uniformité de l'éclairement, du vignettage de l'objectif 312 (figure 7) ou encore de variations de sensibilité entre les cellules des différentes barrettes de capteurs CCD, voire entre les barrettes elles-mêmes.

Pour surmonter ces difficultés, le procédé de l'invention mis en oeuvre dans le calculateur 9 comprend une opération de prétraitement PTTRM consistant à produire, à partir de chacune des images $I_1$, $I_2$ et $I_3$ de la même zone d'observation du produit, une distribution numérisée de luminosité correspondante de cette zone, respectivement $DL_{IR}$, $DL_R$, et $DL_V$.

Les distributions numérisées $DL_{IR}$, $DL_R$, et $DL_V$ sont constituées de pixels codés sur plusieurs bits et forment donc, comme les images $I_1$, $I_2$ et $I_3$, des cartographies de niveaux de gris du pourtour du produit, respectivement dans l'infrarouge, dans le rouge et dans le vert, les distributions numérisées $DL_{IR}$, $DL_R$, et $DL_V$ se distinguant néanmoins des images $I_1$, $I_2$ et $I_3$ par le fait qu'elles sont corrigées, de façon connue en soi, des distorsions précédemment évoquées, inhérentes à l'éclairage et à la prise de vue.

De préférence, l'opération de prétraitement PTTRM inclut aussi la production d'une distribution numérisée supplémentaire, $DL_4$, obtenue par combinaison linéaire des trois distributions numérisées originelles, $DL_{IR}$, $DL_R$, et $DL_V$.

Le procédé de l'invention comprend également une opération DETEXTR de détection et d'extraction de domaines suspects.

Cette opération consiste à exploiter chacune des distributions numérisées $DL_{IR}$, $DL_R$, $DL_V$, et $DL_4$, de la zone d'observation du produit pour détecter la présence et la localisation d'éventuels défauts dans cette zone.

Cette opération est mise en oeuvre, de façon connue en soi, en appliquant à chaque distribution numérisée un traitement de type "détection de contours" (gradient, Prewitt, Sobel, etc.) ou de type seuillage en niveaux de gris. La cartographie qui en résulte identifie, dans la zone d'observation du produit, au plus deux régions qui peuvent être connexes ou non, à savoir une région a priori normale et une région à analyser. Dans le cas d'apparition d'une région à analyser, des tests complémentaires et connus en soi sont pratiqués sur cette cartographie dite "binaire" pour déterminer, dans les différentes distributions, les éventuels domaines suspects $Z_{IR}$, $Z_R$, $Z_V$, et $Z_4$ au moyen de paramètres morphologiques (dimension, forme, orientation) et / ou photométriques (paramètres statistiques sur les niveaux de gris).

Enfin, le procédé de l'invention comprend une opération CLASS de classification consistant à classer les domaines suspects $Z_{IR}$, $Z_R$, $Z_V$, et $Z_4$ extraits des distributions numérisées $DL_{IR}$, $DL_R$, $DL_V$, et $DL_4$ dans une ou plusieurs catégories de défauts internes du produit, de défauts de surface du produit, ou de non-défauts du produit.

Des outils de classification utilisables dans l'invention (sphère de Coulomb, k plus proches voisins, réseaux de neurones, etc.) sont déjà connus et utilisés, dans l'art antérieur, pour classer des domaines suspects en défauts de surface du produit ou en non-défauts.

La classification est réalisée en exploitant une base de données préalablement constituée sur des cas d'expérience analysés de façon spécifique, et en comparant des caractéristiques morphologiques et / ou photométriques des domaines suspects apparaissant dans deux distributions numérisées avec les caractéristiques morphologiques et / ou photométriques par lesquelles des défauts connus ou des non-défauts connus et archivés dans la base de données préétablie se sont manifestés dans deux distributions numérisées correspondantes.

L'invention étend l'application de cette technique et de ses outils de classification pour permettre notamment la discrimination des défauts de surface et des défauts internes au produit.

Pour ce faire, la base de données préétablie est construite de manière à recenser les diverses manifestations de divers types de domaines suspects finalement assimilables à des défauts de surface, à des défauts internes et à non-défauts, ces manifestations étant constituées par les caractéristiques morphologiques et ou photométriques de ces domaines suspects et de leur répartition au moins dans les distributions numérisées $DL_{IR}$, $DL_R$, $DL_V$, et de préférence dans les distributions $DL_{IR}$, $DL_R$, $DL_V$, et $DL_4$.

L'opération CLASS de classification est alors mise en oeuvre en comparant les caractéristiques morphologiques et / ou photométriques des domaines suspects $Z_{IR}$, $Z_R$, $Z_V$, et $Z_4$ et de leur répartition dans les distributions numérisées $DL_{IR}$, $DL_R$, $DL_V$, et $DL_4$ avec des caractéristiques morphologiques et / ou photométriques et les répartitions dans les distributions numérisées correspondantes de défauts internes connus, de défauts de surface connus et de non-défauts connus, conservés dans la base de données préétablie.

De façon schématique, les défauts de surface manifestent leur présence essentiellement dans les distributions $DL_V$ et $DL_4$, marginalement dans la distribution $DL_R$ mais non dans la distribution $DL_{IR}$, alors que les défauts internes manifestent leur présence essentiellement dans les distributions $DL_{IR}$ et $DL_4$, marginalement dans la distribution $DL_R$ mais non dans la distribution $DL_V$.

Les signes de référence insérés après les caractéristiques techniques mentionnées dans les revendications, ont pour seul but de faciliter la compréhension de ces dernières et n'en limitent aucunement leur portée.

## Revendications

1. Procédé pour détecter des défauts d'un produit (1) en cours de défilement dans une installation de laminage, ce procédé comprenant au moins une opération d'éclairage (ECL) consistant à éclairer le produit en défilement par une source de lumière (6), une opération d'acquisition (ACQ) consistant à former par balayage une première image du produit en défilement, observé dans une première bande spectrale de lumière, une opération de prétraitement (PTTRM) consistant au moins à produire, à partir de la première image d'une zone d'observation du produit, une première distribution numérisée de luminosité de cette zone, une opération (DETEXTR) de détection et d'extraction de domaines suspects consistant à exploiter la première distribution numérisée de luminosité de la zone d'observation du produit pour détecter la présence et la localisation d'éventuels défauts dans cette zone, et une opération de classification (CLASS) consistant au moins à classer les domaines suspects dans une ou plusieurs catégories de défauts ou de non-défauts par comparaison des caractéristiques morphologiques et / ou photométriques de ces domaines suspects avec des caractéristiques morphologiques et / ou photométriques de défauts connus et de non-défauts connus, conservés dans une base de données préétablie, ledit procédé étant appliqué à un produit (1) en cours de défilement dans une installation de laminage à chaud et émettant spontanément un rayonnement lumineux dans un spectre d'émission spontanée incluant l'infrarouge, en ce que l'opération d'éclairage (ECL) est mise en oeuvre en éclairant le produit en défilement par une source de lumière visible (6) émettant au moins en dehors du spectre d'émission spontanée, **caractérisé en ce que** l'opération d'acquisition (ACQ) consiste à former au moins trois images ($I_1$, $I_2$, $I_3$) de la même zone d'observation de ce produit dans trois bandes spectrales disjointes respectives dont la première se situe au moins dans l'infrarouge, la deuxième au moins dans le rouge, et la troisième au moins dans une partie du spectre visible externe au spectre d'émission spontanée, **en ce que** l'opération de prétraitement (PTTRM) est au moins mise en oeuvre sur ces trois images ($I_1$, $I_2$, $I_3$) pour fournir au moins trois distributions respectives de luminosité ($DL_{IR}$, $DL_R$, $DL_V$, $DL_4$) numérisées sur plusieurs bits, **en ce que** l'opération (DETEXTR) de détection et d'extraction de domaines suspects ($Z_{IR}$, $Z_R$, $Z_V$, $Z_4$) est au moins mise en oeuvre sur les distributions numérisées de luminosité ($DL_{IR}$, $DL_R$, $DL_V$, $DL_4$), et **en ce que** l'opération de classification (CLASS) consiste à classer au moins les domaines suspects ($Z_{IR}$, $Z_R$, $Z_V$, $Z_4$) extraits des distributions numérisées ($DL_{IR}$, $DL_R$, $DL_V$, $DL_4$) dans une ou plusieurs catégories de défauts internes du produit, de défauts de surface du produit, ou de non-défauts du produit au moins par comparaison des caractéristiques morphologiques et / ou photométriques de ces domaines suspects ($Z_{IR}$, $Z_R$, $Z_V$, $Z_4$) et de leur répartition dans les distributions numérisées ($DL_{IR}$, $DL_R$, $DL_V$, $DL_4$) avec des caractéristiques morphologiques et / ou photométriques et les répartitions dans les distributions numérisées correspondantes de défauts internes connus, de défauts de surface connus et de non-défauts connus, conservés dans une base de données préétablie.

2. Procédé suivant la revendication 1, **caractérisé en ce que** les images ($I_1$, $I_2$, $I_3$) sont réalisées au moyen de capteurs respectifs (313) au moins sensibles à l'infrarouge et produisant des images brutes respectives ($I_{110}$, $I_{210}$, $I_{310}$), **en ce que** la première image ($I_1$) est réalisée dans l'infrarouge et directement obtenue par capture de la première image brute ($I_{110}$) derrière un filtre optique opaque aux rayonnements de longueurs d'onde inférieures à l'infrarouge, et **en ce que** les deuxième et troisième images ($I_2$, $I_3$) sont respectivement obtenues à partir des deuxième et troisième images brutes ($I_{210}$, $I_{310}$) par soustraction de la première image brute ($I_{110}$).

3. Procédé suivant la revendication 1 ou 2, **caractérisé en ce que** l'opération d'éclairage (ECL) consiste à éclairer le produit par une source (4) de lumière verte, et **en ce que** la troisième image ($I_3$) est réalisée dans le vert.

4. Procédé suivant l'une quelconque des revendications précédentes, **caractérisé en ce que** l'opération de prétraitement (PTTRM) inclut la production d'une quatrième distribution numérisée de luminosité ($DL_4$) obtenue par com-

binaison linéaire des trois distributions numérisées originelles ($DL_{IR}$, $DL_R$, $DL_V$), cette quatrième distribution ($DL_4$) étant utilisée, dans l'opération (DETEXTR) de détection et d'extraction et dans l'opération de classification (CLASS), au même titre que les trois distributions numérisées originelles ($DL_{IR}$, $DL_R$, $DL_V$).

5. Procédé suivant l'une quelconque des revendications précédentes, **caractérisé en ce que** le produit (1) en cours de défilement dans l'installation de laminage à chaud est un produit long, dont la section transversale s'inscrit dans un polygone, un cercle ou une ellipse.

6. Procédé suivant la revendication 5, **caractérisé en ce que** la zone d'observation commune aux trois images ($I_1$, $I_2$, $I_3$) s'étend sur tout le pourtour du produit et sur une partie au moins de sa longueur, et **en ce que** chacune des trois images ($I_2$) est formée en accolant l'une à l'autre au moins deux images élémentaires ($I_{21}$, $I_{22}$, $I_{23}$, $I_{24}$) formées, dans une même bande spectrale de lumière, sur une même partie de la longueur du produit et sur des portions disjointes et complémentaires du pourtour de ce produit.

## Patentansprüche

1. Verfahren zur Erfassung von Fehlern eines in einer Walzanlage durchlaufenden Produkts (1), wobei dieses Verfahren mindestens einen Beleuchtungsvorgang (ECL), der darin besteht, das durchlaufende Produkt durch eine Lichtquelle (6) zu beleuchten, einen Erfassungsvorgang (ACQ), der darin besteht, durch Abtasten ein erstes Bild des durchlaufenden Produkts zu formen, das in einem ersten Licht-Spektralband beobachtet wird, einen Vorverarbeitungsvorgang (PTTRM), der mindestens darin besteht, ausgehend vom ersten Bild einer Beobachtungszone des Produkts eine erste digitalisierte Helligkeitsverteilung dieser Zone zu erzeugen, einen Vorgang (DETEXTR) der Erkennung und Extraktion verdächtiger Bereiche, der darin besteht, die erste digitale Helligkeitsverteilung der Beobachtungszone des Produkts auszuwerten, um das Vorhandensein und die Lokalisierung möglicher Fehler in dieser Zone zu erkennen, und einen Klassifizierungsvorgang (CLASS) enthält, der mindestens darin besteht, die verdächtigen Bereiche in eine oder mehrere Fehler- oder Kein-Fehler-Kategorien durch Vergleich der morphologischen und/oder photometrischen Merkmale dieser verdächtigen Bereiche mit morphologischen und/oder photometrischen Merkmalen bekannter Fehler und bekannter Kein-Fehler einzuordnen, die in einer vorab erstellten Datenbank aufbewahrt werden, wobei das Verfahren an ein in einer Warmwalzanlage durchlaufendes Produkt (1) angewendet wird und spontan eine Lichtstrahlung in ein Spektrum spontaner Emission emittiert, das den Infrarotbereich umfasst, dass der Beleuchtungsvorgang (ECL) durchgeführt wird, indem das durchlaufende Produkt von einer Quelle sichtbaren Lichts (6) beleuchtet wird, die mindestens außerhalb des Spektrums spontaner Emission emittiert, **dadurch gekennzeichnet, dass** der Erfassungsvorgang (ACQ) darin besteht, mindestens drei Bilder ($I_1$, $I_2$, $I_3$) der gleichen Beobachtungszone dieses Produkts in drei getrennten Spektralbändern zu formen, von denen das erste sich mindestens im Infrarotbereich, das zweite sich mindestens im Rotbereich und das dritte sich mindestens in einem Teil des sichtbaren Spektrums außerhalb des Spektrums spontaner Emission befindet, dass der Vorverarbeitungsvorgang (PTTRM) mindestens an diesen drei Bildern ($I_1$, $I_2$, $I_3$) angewendet wird, um mindestens drei digitalisierte Helligkeitsverteilungen ($DL_{IR}$, $DL_R$, $DL_V$, $DL_4$) aus mehreren Bits zu liefern, dass der Vorgang (DETEXTR) der Erfassung und Extraktion verdächtiger Bereiche ($Z_{IR}$, $Z_R$, $Z_V$, $Z_4$) mindestens an den digitalen Helligkeitsverteilungen ($DL_{IR}$, $DL_R$, $DL_V$, $DL_4$) angewendet wird, und dass der Klassifizierungsvorgang (CLASS) darin besteht, mindestens die aus den digitalisierten Verteilungen ($DL_{IR}$, $DL_R$, $DL_V$, $DL_4$) extrahierten verdächtigen Bereiche ($Z_{IR}$, $Z_R$, $Z_V$, $Z_4$) mindestens durch Vergleich der morphologischen und/oder photometrischen Merkmale dieser verdächtigen Bereiche ($Z_{IR}$, $Z_R$, $Z_V$, $Z_4$) und ihrer Aufteilung in den digitalisierten Verteilungen ($DL_{IR}$, $DL_R$, $DL_V$, $DL_4$) mit morphologischen und/oder photometrischen Merkmalen und den Aufteilungen in den entsprechenden digitalisierten Verteilungen bekannter innerer Fehler, bekannter Oberflächenfehler und bekannter Kein-Fehler, die in einer vorab erstellten Datenbank aufbewahrt werden, in eine oder mehrere Kategorien von Fehlern innerhalb des Produkts, Oberflächenfehlern des Produkts oder Kein-Fehlern des Produkts einzuordnen.

2. Verfahren nach Anspruch 1, **dadurch gekennzeichnet, dass** die Bilder ($I_1$, $I_2$, $I_3$) mittels jeweiliger Sensoren (313) hergestellt werden, die zumindest infrarotlichtempfindlich sind und jeweilige Rohbilder ($I_{110}$, $I_{210}$, $I_{310}$) erzeugen, dass das erste Bild (11) im Infrarotbereich hergestellt und direkt durch Aufnahme des ersten Rohbilds ($I_{110}$) hinter einem für die Strahlungen von Wellenlängen unterhalb des Infrarotbereichs undurchlässigen optischen Filter erhalten wird, und dass die zweiten und dritten Bilder ($I_2$, $I_3$) je ausgehend von den zweiten und dritten Rohbildern ($I_{210}$, $I_{310}$) durch Subtraktion des ersten Rohbilds ($I_{110}$) erhalten werden.

3. Verfahren nach Anspruch 1 oder 2, **dadurch gekennzeichnet, dass** der Beleuchtungsvorgang (ECL) darin besteht, das Produkt von einer Grünlichtquelle (4) zu beleuchten, und dass das dritte Bild ($I_3$) im Grünbereich hergestellt wird.

4. Verfahren nach einem der vorhergehenden Ansprüche, **dadurch gekennzeichnet, dass** der Vorbearbeitungsvorgang (PTTRM) die Erzeugung einer vierten digitalisierten Helligkeitsverteilung ($DL_4$) umfasst, die durch lineare Kombination der drei ursprünglichen digitalisierten Verteilungen ($DL_{IR}$, $DL_R$, $DL_V$) erhalten wird, wobei diese vierte Verteilung ($DL_4$) im Vorgang (DETEXTR) der Erfassung und Extraktion und im Klassifizierungsvorgang (CLASS) gleichberechtigt mit den drei ursprünglichen digitalisierten Verteilungen ($DL_{IR}$, $DL_R$, $DL_V$) verwendet wird.

5. Verfahren nach einem der vorhergehenden Ansprüche, **dadurch gekennzeichnet, dass** das in der Warmwalzanlage durchlaufende Produkt (1) ein langes Produkt ist, dessen Querschnitt in einem Polygon, einem Kreis oder einer Ellipse liegt.

6. Verfahren nach Anspruch 5, **dadurch gekennzeichnet, dass** die den drei Bildern ($I_1$, $I_2$, $I_3$) gemeinsame Beobachtungszone sich über den ganzen Umfang des Produkts und über mindestens einen Teil seiner Länge erstreckt, und dass jedes der drei Bilder ($I_2$) geformt wird, indem mindestens zwei Elementarbilder ($I_{21}$, $I_{22}$, $I_{23}$, $I_{24}$) aneinandergefügt werden, die in einem gleichen Licht-Spektralband in einem gleichen Teil der Länge des Produkts und in getrennten und komplementären Abschnitten des Umfangs dieses Produkts geformt werden.

**Claims**

1. Method for detecting defects in a product (1) in the process of running through a rolling mill, this method comprising at least one illuminating operation (ECL) consisting in illuminating the running product with a light source (6), an acquiring operation (ACQ) consisting in forming by scanning a first image of the running product, observed in a first spectral light band, a pre-processing operation (PTTRM) consisting at least in producing, from the first image of a zone of observation of the product, a first digitized luminosity distribution of this zone, an operation (DETEXTR) of detecting and extracting suspect domains consisting in exploiting the first digitized luminosity distribution of the zone of observation of the product to detect the presence and location of any defects in this zone, and a classifying operation (CLASS) consisting at least in classifying these suspect domains into one or more categories of defects or non-defects by comparing the morphological and/or photometric properties of these suspect domains with morphological and/or photometric properties of known defects and known non-defects, which are kept in a pre-built database, said method being applied to a product (1) in the process of running through a hot-rolling mill and spontaneously emitting light radiation in a spontaneous emission spectrum including the infrared, the illuminating operation (ECL) being implemented by illuminating the running product with a visible light source (6) emitting at least outside of the spontaneous emission spectrum, **characterized in that** the acquiring operation (ACQ) consists in forming at least three images ($I_1$, $I_2$, $I_3$) of the same zone of observation of this product in three respective separate spectral bands the first of which is located at least in the infrared, the second of which is located at least in the red, and the third of which is located at least in a portion of the visible spectrum external to the spontaneous emission spectrum, **in that** the pre-processing operation (PTTRM) is at least implemented on these three images ($I_1$, $I_2$, $I_3$) to provide at least three respective luminosity distributions ($DL_{IR}$, $DL_R$, $DL_V$, $DL_4$) digitized to a plurality of bits, **in that** the operation (DETEXTR) of detecting and extracting suspect domains ($Z_{IR}$, $Z_R$, $Z_V$, $Z_4$) is at least implemented on the digitized luminosity distributions ($DL_{IR}$, $DL_R$, $DL_V$, $DL_4$), and **in that** the classifying operation (CLASS) consists in classifying at least the suspect domains ($Z_{IR}$, $Z_R$, $Z_V$, $Z_4$) extracted from the digitized distributions ($DL_{IR}$, $DL_R$, $DL_V$, $DL_4$) into one or more categories of internal defects of the product, of surface defects of the product, or of non-defects of the product at least by comparing morphological and/or photometric properties of these suspect domains ($Z_{IR}$, $Z_R$, $Z_V$, $Z_4$) and their arrangement in the digitized distributions ($DL_{IR}$, $DL_R$, $DL_V$, $DL_4$) with morphological and/or photometric properties and arrangements in the corresponding digitized distributions of known internal defects, of known surface defects and of known non-defects, which are kept in a prebuilt database.

2. Method according to Claim 1, **characterized in that** the images ($I_1$, $I_2$, $I_3$) are taken by means of respective sensors (313) at least sensitive to the infrared and producing respective raw images ($I_{110}$, $I_{210}$, $I_{310}$), **in that** the first image ($I_1$) is taken in the infrared and obtained directly by capturing the first raw image ($I_{110}$) behind an optical filter that is opaque to radiation of wavelength shorter than the infrared, and **in that** the second and third images ($I_2$, $I_3$) are respectively obtained from the second and third raw images ($I_{210}$, $I_{310}$) by subtraction of the first raw image ($I_{110}$).

3. Method according to Claim 1 or 2, **characterized in that** the illuminating operation (ECL) consists in illuminating the product with a green light source (4), and **in that** the third image ($I_3$) is taken in the green.

4. Method according to any one of the preceding claims, **characterized in that** the pre-processing operation (PTTRM) includes producing a fourth digitized luminosity distribution ($DL_4$) obtained by linear combination of the three original digitized distributions ($DL_{IR}$, $DL_R$, $DL_V$), this fourth distribution ($DL_4$) being used, in the detecting and extracting operation (DETEXTR) and in the classifying operation (CLASS), just as the three original digitized distributions ($DL_{IR}$, $DL_R$, $DL_V$.

5. Method according to any one of the preceding claims, **characterized in that** the product (1) in the process of running through the hot-rolling mill is a long product, the transverse cross section of which fits within a polygon, a circle or an ellipse.

6. Method according to Claim 5, **characterized in that** the zone of observation common to the three images ($I_1$, $I_2$, $I_3$) extends all the way around the perimeter of the product and over a portion at least of its length, and **in that** each of the three images ($I_2$) is formed by stitching together at least two elementary images ($I_{21}$, $I_{22}$, $I_{23}$, $I_{24}$) of one and the same portion of the length of the product and of separate and complementary portions of the perimeter of this product, said elementary images being formed in one and the same spectral light band.

**Fig. 1**

**Fig. 2**

**Fig. 3**

**Fig. 5**

Fig. 4

Fig. 6

31

314

313
311

312

316

315

310

**Fig.7**

$ECL$

$ACQ$

$I_{110}$  $I_{210}$  $I_{310}$
$I_{120}$  $I_{220}$  $I_{320}$
- - - - - - - -
$I_{140}$  $I_{240}$  $I_{340}$
$\downarrow$

$I_{11}$  $I_{21}$  $I_{31}$
$I_{12}$  $I_{22}$  $I_{32}$
- - - - - - - -
$I_{14}$  $I_{24}$  $I_{34}$
$\downarrow$

$I_1$  $I_2$  $I_3$

$I_1$
$I_2$   →  PTTRM
$I_3$

$DL_{IR}$
$DL_R$           →  DETEXTR
$DL_V$
$DL_4$

$Z_{IR}$
$Z_R$        →  CLASS
$Z_V$
$Z_4$

Fig. 8

## RÉFÉRENCES CITÉES DANS LA DESCRIPTION

**Documents brevets cités dans la description**

- US 4759072 A

- US 4608599 A

**Littérature non-brevet citée dans la description**

- **M. DOMINIQUE BLANCHARD.** Système d'inspection automatique de surface : expérience et perspective au sein du Groupe Usinor. *Revue de la Métallurgie,* Juin 2002